# EUROPEAN PATENT APPLICATION

(11) **EP 1 821 184 A2**
(43) Date of publication of application: **22.08.2007**
(21) Application number: 07405035.2
(22) Date of filing: 06.02.2007
(51) Int. Cl.: G06F 3/041

(54) **System and method for interacting with a display through a shop window**

(30) Priority: 08.02.2006 DE 102006006343
(71) Applicant: Almeva AG, 9223 Schweizersholz (CH)
(72) Inventor: Kirchner, Ralph, 8400 Winterthur (CH)
(74) Representative: Frei Patent Attorneys

(57) **Abstract**

The invention is related to a system for interacting with a display through a display window, comprising a recording unit configured to be placed behind the display window for recording a pointer object in front of said display window, at least one deflection unit configured to direct a beam path from a space in front of the display window to said recording unit, a computer unit configured to be connected to said recording unit for determining a position of the pointer object with respect to the display window, and shield means by means of which beam paths that are not deflected by the deflection unit are suppressed, and to a corresponding method. The invention achieves a good contrast between the pointer object and the background and therefore an improved recognition of the pointer object.

## Description

### FIELD OF THE INVENTION

The invention concerns a system and method for interacting with a display through a display window.

### BACKGROUND OF THE INVENTION

In conventional touchscreens, a user moves a pointer object, e.g. his fingers, on a display that is identical to a touch surface. The position on the display and/or the movement of the pointer object with respect to the display is detected by mechanical sensors. A predetermined event is triggered depending on the position and/or on other actions of the pointer like pushing onto a certain location on the display. Such systems are susceptible to mechanical wear and thus because of increased maintenance requirements in many cases not suited for continuous public use.

Systems that simulate such a mechanical touchscreen by means of optical detection of the pointer object with respect to a passive touch surface are known. For example, US 7,034,807 discloses a configuration for user interaction with a display visible through a display window (shop window). The area of the display as visible through the window acts as passive touch surface. The system comprises a recording unit for recording a pointer object in the vicinity of the touch surface by optical means. A computer unit connected to the recording unit is capable of determining a position of the pointer object in the vicinity of the touch surface from the signals recorded by the recording unit. The display is located behind the display window, i.e. separated from the user by the display window. The recording unit comprises two cameras, for example. It is also located behind the display window. By means of a deflection unit, e.g. mirrors or prisms, located above or beneath the touch surface, a beam path is directed from the recording unit to a space in front of the touch surface. In order to enhance contrast, the space in front of the display/touch surface is illuminated with infrared light having the same beam path as the recording unit. Reflective surfaces are arranged opposite the deflection unit with respect to the touch surface. They reflect the infrared light and act as background in front of which the pointer object can be detected with increased contrast. The position of the pointer is then determined, e.g. by means of triangulation.

Similar camera-based touch systems are for example disclosed by WO-A 02/03316, EP-A 1420335, and DE-A 10163648. These documents teach to use a recording unit with at least two cameras having overlapping fields of view that encompass a touch surface bordered by a frame. The presence of a pointer on or in the vicinity of the touch surface is determined by analyzing the difference between two consecutive images of the touch surface. If a pointer is present, the acquired image data is processed such that only selected subregions of the image are evaluated.

Known camera-based touch systems have the problem that the images acquired by the recording unit are often distorted by light from other sources than the pointer, e.g. directly incident, scattered or reflected light from the environment. Light from such "external" sources often has a much higher intensity than light emerging from the pointer object. As the camera control adapts to the maximum intensity, the ability to detect the pointer is often greatly reduced. The image recorded by the recording unit is also very sensitive to change in external illumination, e.g. day and night. These circumstances lead to errors in the determination of the position of the pointer object.

To reduces these errors, it is common to use an additional IR-illumination of the space in front of the touch surface, and to use IR sensitive cameras to acquire the image. Contrast is further increased by the above mentioned reflective surfaces. The illuminated pointer object can then be detected with higher contrast. This, however, makes the system very complex and costly.

A further problem arising with known systems, e.g. as shown in US 7,034,807, is that the field of view of the recording unit is such that not only the region around the touch surface but even parts of the surrounding space are recorded. Therefore, an image recorded by the recording unit comprises a lot of side information that complicates extraction of the correct position of pointer object. It is difficult to distinguish which of the objects within the field of view are supposed to act as pointer object, whether a pointer object indeed touches the window or whether it is at a distance therefrom and no interaction is intended.

A further problem arises with double glazed display windows. Light can be reflected between the panes of the window, reach the recording unit, distort the image acquired and thus falsify the determination of the position of the pointer object.

### SUMMARY OF THE INVENTION

It is therefore an object of the present invention to provide a system for interacting with a display behind a display window with improved capacity of detecting the position of a pointer object with respect to a touch surface of the display window. In particular, the setup of the system shall be simple so that it can be installed at any window without much effort and costs. Furthermore, the image generation and evaluation shall be simple and have an increased reliability and stability with respect to a change in external lightning conditions.

It is a further object of the invention to provide a system for interacting with a display behind a display window that can be implemented with standard components, in particular with a standard camera.

It is a further object of the invention to provide a method for interacting with a display behind a display window with improved capacity of detecting the position of a pointer object with respect to a touch surface of the display window.

These and further objects are achieved by a system for interacting with a display through a display window having the features of claim 1 and by a method for interacting with a display through a display window having the features of claim 16. Advantageous embodiments are described in the dependent claims and the description, and are shown in the figures.

The system for interacting with a display through a display window comprises a recording unit configured to be placed behind the display window for recording a pointer object in front of said display window, in particular on or in the immediate vicinity of a touch surface on the display window. The touch surface normally corresponds to the surface area of the display window through which the display located behind the display window is visible, or to a part of said surface area. The recording unit preferably comprises one or more cameras or other optical sensors that are capable to produce an image or spatial information in other ways, e.g. a CCD array.

The system further comprises at least one deflection unit configured to direct light emerging from a space in front of the display window, in particular from the immediate vicinity of the touch surface, to said recording unit. In other words, the deflection unit deflects light in such a way that the field of view of the recording unit located behind the display window encompasses said space in front of the display window, and preferably encompasses the touch surface. The deflection unit may comprise one or more mirrors or prisms.

The system further comprises a computer unit configured to be connected to said recording unit for determining a position of the pointer object with respect to the display window, in particular with respect to the touch surface. Preferably, at least two images or parts thereof taken by the recording unit from different perspectives are evaluated. From the location of the (image of the) pointer object within the images taken by the recording unit, the location of the pointer object on or with respect to the touch surface is calculated.

The system further comprises shield means by means of which beam paths that are not deflected by the deflection unit are suppressed. Light traveling along these "suppressed" beam paths thus does not reach the recording means at all or contributes to the image generated by the recording means with reduced intensity. These shield means ensure that there is a good contrast between the pointer object and its background, while reducing the intensity of light from other sources than the pointer object. Preferably they ensure that direct incidence of light onto the recording means is not possible, to prevent overdriving the recording means. Also, reflections at a surface of the display window contribute to the image at most with reduced intensity. The shield means according to the invention make it possible to do without external illumination of the pointer object and without reflective surfaces. It is sufficient to use the display itself as illumination of the pointer object and to detect light scattered by the pointer object.

In a preferred embodiment of the invention, the shield means are configured such that beam paths corresponding to a direct incidence of light on the recording unit are suppressed, and preferably do not reach the recording means at all, preventing overdrive of the control of the recording means and thus ensuring a good contrast for detection of the pointer object. For example, this shield means may comprise at least one shading element that is arranged at a distance from a front surface of the display window with a deflection surface of the deflection means located between the front surface and the shading element. The shape of the shading element, its distance to the display window and its location with respect to the recording means are chosen such that no direct incidence of light onto the recording means, e.g. a lens of a camera, is possible. Further protective screens arranged at a front and/or a rear surface of the display window in the vicinity of the recording means are possible.

In a further preferred embodiment of the invention, the shield means are configured such that beam paths corresponding to reflections at a surface of the display window are suppressed. This is especially beneficial in double glazed windows, where reflections at one of the surfaces of the two window panes can otherwise reach the recording means with full intensity. Preferably, the shield means in this embodiment comprise one or more protective screens, e.g. semi-transparent foils, arranged on the front and/or rear surface of the display window in the vicinity of the recording means. The protective screen has preferably only the function to attenuate the light reflected at one of the surfaces, e.g. by scattering. Preferably, transparency ranges from 40 to 90 %. Though complete blocking of the reflected light is possible, this could lead to an overdrive of the camera control which possibly reduces the contrast of the pointer object in front of the background.

The protective screen is preferably shaped in such a way that undistorted transmission of light deflected by the deflection means onto the recording means is possible. For example, it comprises an opening or aperture.

Preferably, the recording means acquire images that encompass the touch surface. Pixels that correspond to other regions than the touch surface are preferably disregarded. To prevent that reflections at the touch surface under a small angle of incidence with respect thereto are erroneously identified as a pointer object, the touch surface is preferably encircled by a frame. This is not necessary if the display window itself already comprises a frame.

In a further preferred embodiment of the invention, the computer unit generates an average background by averaging a plurality of images acquired by the recording unit. Differences with respect to this background on a small time scale, e.g. movement of the pointer on the touch surface, are detected in real time, thus fulfilling the requirements of reliable interaction with the display. They do not significantly contribute to the average background. Slow variations of the image, e.g. caused by change of night and day, or permanent alteration thereof, e.g. by dirt on the touch surface or the deflection unit, on the other hand, become part of the average background and do not affect detection of the "true" pointer object.

The recording unit, e.g. the camera(s), can be attached directly at the rear surface of the display window. This has the advantage that oscillations of the display window do not affect the analysis of the acquired data. The display itself can be exchanged without having to calibrate the system. However, the system has to be calibrated in the place of use.

A display having cameras integrated into its frame has the advantage that the position and orientation of the cameras with respect to one another is known. The calibration of the system can be done in the factory. Only a mount for the display, and not a separate one for the camera, is necessary.

To reduce damage caused by vandalism, the cameras are arranged behind the display window. Furthermore, the deflection unit and any other elements arranged on the user-side of the window are preferably shaped with rounded edges in order to reduce a contact area, e.g. for climbing.

The inventive technology can be implemented at virtually any kind of window glass in an extremely cost efficient manner. Double glazed or even mirrored windows can be utilized. The invention does not require any special components like specific cameras, additional light sources or reflectors.

### BRIEF DESCRIPTION OF THE DRAWINGS

Embodiments of the invention are shown in the drawings
- Fig. 1: shows schematically a setup of the inventive system in a view on a display window;
- Fig. 2: shows the setup as shown in Fig. 1 in a view parallel to the display window;
- Fig. 3A+3B: show a deflection unit and shield means in one embodiment of the invention;
- Fig. 4: shows a flow chart of different steps of a method of processing acquired image data;
- Fig. 5A-C: show how spatial information is extracted from an image;
- Fig. 6: shows a routine for detecting a pointer object in front of a background.

### DESCRIPTION OF THE PREFERRED EMBODIMENTS

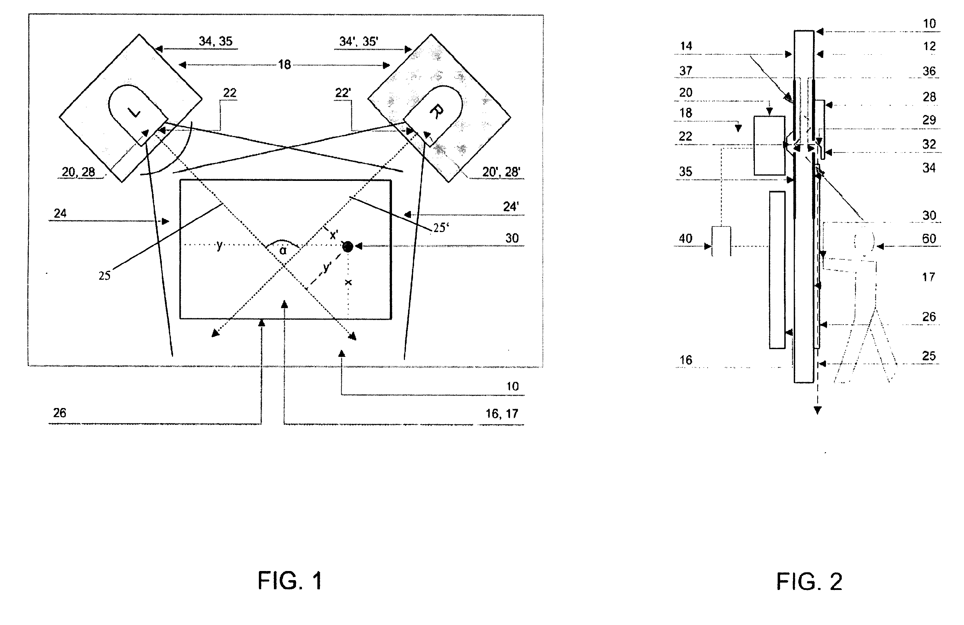

Fig. 1 and 2 show a setup of the inventive system in a view on a display window 10 and parallel to the display window 10, respectively. The system comprises a recording unit 18 with here two cameras 20, 20'. The cameras are located behind the display window 10. "Behind the display window" denotes the space that is separated from a user 60 by the display window. "In front of the display window" is the space that is accessible by the user 60. The cameras 20, 20' are arranged at a distance from one another and have overlapping fields of view 24, 24'. By means of a deflection unit 28, 28' arranged in front of the display window 10, the beam paths are shaped such that the fields of view 24, 24' encompass a part of a front surface 12 of the display window 10. Near the cameras 20, 20', their optical axes 25, 25' are generally perpendicular to the display window 10. They are then deflected such that they run generally parallel to the display window 10. The optical axes 25, 25' are arranged at an angle α of about 90° with respect to one another. Other angles are possible, as long as the fields of view 224, 24' do not coincide.

A display 16 is located behind the display window 10 in the immediate vicinity of a rear surface 14 thereof, preferably mounted directly to the display window 10 (mount not shown). It is located such that it lies within the field of view 24, 24' of both cameras 20, 20', as seen through the display window 10. The area of the front surface 12 where the display 16 is visible and that is contained in the fields of view 24, 24' of both cameras 20, 20' can act as touch surface 17. This means that the location of a pointer object 30, here a user's finger, on or in the immediate vicinity of the touch surface 17 can be detected and transformed into a movement of a pointer object, e.g. a mouse pointer, on the display 16. It is also possible to use only a part of the display 16 as visible through the display window 10 as touch surface 17. As the cameras 20, 20' view generally parallel to the display window, the touch surface 17 is represented as a narrow strip in the images taken by the cameras 20, 20'. The touch surface 17 may be encircled by a frame 26. This prevents distortion of the images taken by objects passing by the display window 10.

A computer unit 40 is arranged behind the display window 10. It receives data from the recording unit 18 and is able to extract therefrom an information on whether a pointer is present, where it is located and/or how it is moved. This information is used to move a pointer object on the display 16 and/or to trigger a predetermined action, e.g. after detecting a movement corresponding to a "click" or "double click".

The computer unit 40 may be part of a standard computer used in connection with the display 16, e.g. by running a certain program thereon. The inventive system preferably does not occupy more than 15% of the overall computing capacity of the computer. It is discussed below how the performance is optimized.

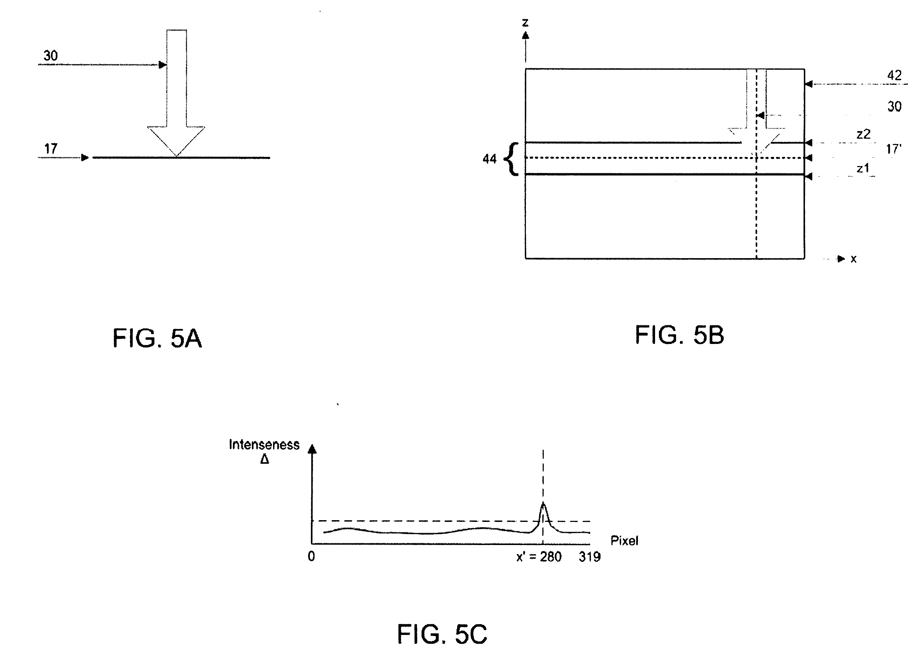

The computer unit 40 is able to detect the position x'/y' of the pointer object 30 on the touch surface 17 and to transform these world coordinates x'/y' into screen coordinates x/y. In this example, transformation into screen coordinates x/y is particularly easy, because analysis of images taken by the left-hand side camera 20 yields coordinate y' measured with respect to the optical axis 25, and analysis of images taken by the right-hand side camera 20' yields coordinate x' measured with respect to the optical axis 25'. This will be described in more detail in connection with Figs. 5A-C.

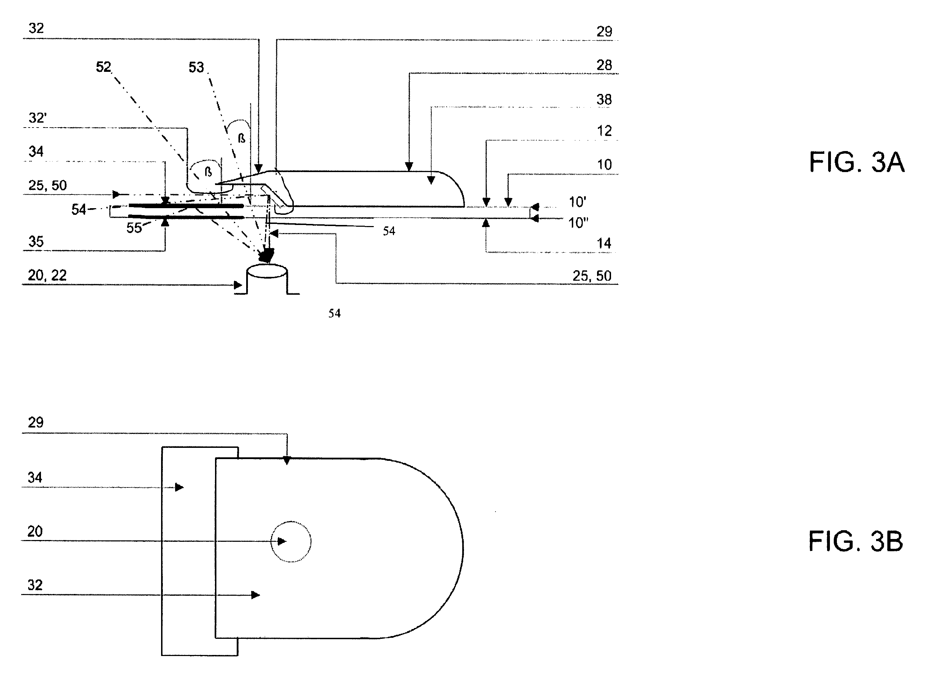

According to the invention, there are shield means that serve to reduce the contribution of beam paths not deflected by the deflection unit 28, 28' to the image acquired by the recording unit 18. They comprise a shading element 32, 32' arranged at or in the vicinity of the deflection unit 28, 28' and shown in more detail in Fig. 3A. They further comprise protective screens 34, 34', 35, 35' arranged at the front and/or rear surface 12, 14 of the display window 10 in the vicinity of the cameras 20, 20' and having an opening 36, 37 in the immediate vicinity of an objective 22 of the cameras 20, 20'. The function of these shield means will be described in connection with Fig. 3A+B.

Fig. 3A+B show one example of a deflection unit 28 comprising a deflection surface 29, e.g. a mirror, arranged at an angle of about 45° with respect to the optical axis of the camera 20 and to the front/rear surface 12, 14. Beam paths 50 running in a plane parallel to the front/rear surface 12, 14 comprising the optical axis 25 are thus deflected onto the objective 22 of the camera. After deflection at the deflection surface 29, the angle of incidence β with respect to a normal to the front/rear surface 12, 14 is small, e.g. smaller than 30°.

A further beam path 53 corresponds to direct incidence of light without deflection at the deflection surface 29, e.g. incidence of sun light or automobile headlights with a generally quite high intensity. Without shield means beam path 53 would reach the objective 22 and cause the camera control to adjust to the higher intensity, thus darkening the overall image corresponding to a smaller aperture. Beam path 53 is blocked by shading element 32 which is here formed in one piece with the deflection means 28. Shading element 32 comprises a planar face 32' running parallel to the front/rear surface 12, 14. The deflection surface 29 is arranged between the face 32' and the front/rear surface 12, 14. The planar face 32' is preferably shaped and arranged such that directly incident beam paths 53 having an angle of incidence β within a predetermined range, e.g. of 0 to 60° or 0 to 78-80°, are blocked. The face 32' may be rectangular and run parallel to an edge of the deflection surface 29. Generally, the complete body 38 of the deflection unit 28 may serve as shading element 32 blocking all beam paths having an angle of incidence β in a predetermined range. Preferably this angular range is chosen such that the complete field of view of the camera - if deflections at the deflection surface 29 are not taken into account - is covered. This is indicated by further beam path 53'. Generally, all beam paths corresponding to direct incidence of light having an angle of incidence β in a predetermined range are blocked by a shading element arranged at a distance from the front surface, potentially in combination with a protective screen on one of the surfaces 12, 14.

Another beam path 52 having an angle of incidence β outside the range blocked by the shading element 32 is attenuated by protective screen 34 arranged on the front surface 14. The protective screen 34 comprises a semi-transparent foil that does not completely block but attenuate the light. Directly incident beam paths 52 with angles of incidence β within a further predetermined range, e.g. 45 to 80°, are affected by the protective screen 34. Furthermore, protective screen 34 attenuates beam paths 54 traveling inside the display window 10, e.g. by reflections between two panes 10', 10" of a double glazed window. Beam path 54 as shown here does thus reach the deflection surface 29 and the objective 22 with reduced intensity and has thus less potential of distorting the image.

A further beam path 55 that is reflected at the inside of outer pane 10' is attenuated by a further protective screen 35 arranged at the rear surface 14.

Generally, all beam paths corresponding to light reflected at one of the faces of the display window is attenuated by a protective screen arranged at the front and/or rear surface or at a distance therefrom.

The size of the protective screens 34, 35, 34', 35' is determined from the aperture of the cameras and the thickness of the display window or the distance between two window panes 10', 10", such that no light reflected within the display window itself can reach the cameras 20, 20'. Furthermore, it is avoided that directly incident light beams reach the cameras.

By the combination of the protective screens 34, 35 with the shading element 32 it is achieved that the image acquired by the camera 20 is less distorted by reflections within the display window 10 and direct incidence of light. The contrast within the actual region of interest, i.e. the space in front of the touch surface 17, is thus enhanced.

As shown in Fig. 1, the protective screens 34, 35 may as well be arranged projecting laterally beyond the body of the deflection unit 28 at all sides.

The body 38 of the deflection unite 28 is rounded in order to give as little area to serve as a grip or to step on as possible. Furthermore, the shading element 32 is tapered such that it cannot be easily gripped.

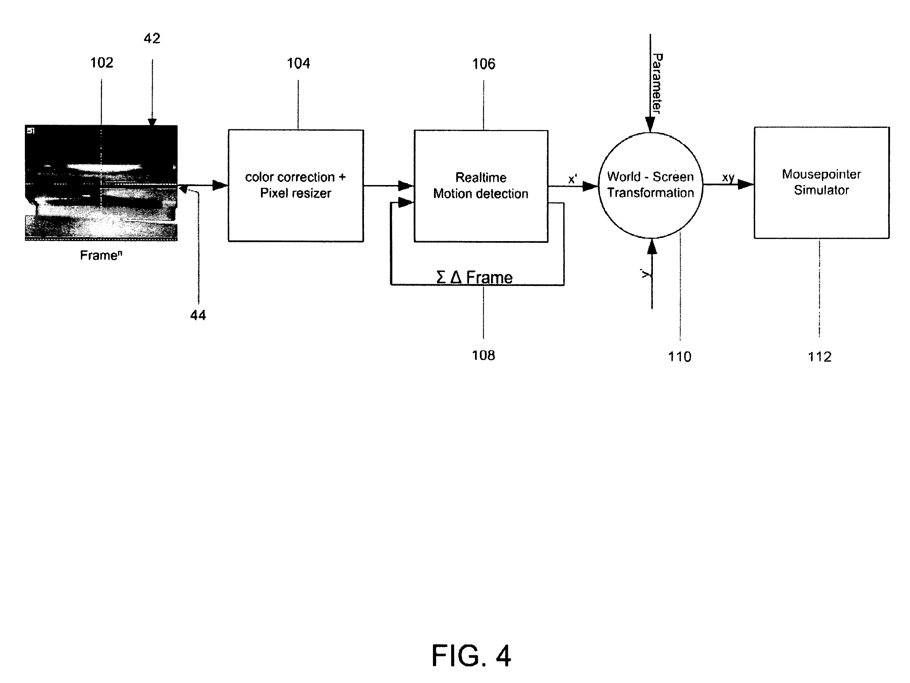

Fig. 4 shows a flow chart of different steps of a method of processing acquired image data. Fig. 5A-C illustrate this method in more detail.

In a first step 102, image or frame 42 is taken by the recording unit 18, here a digital camera, and transmitted to the computer unit 40. Each camera 20, 20 generates an image 42 in a format 320x240, or more. Only a subset of the pixels constituting the image 42 are used for further evaluation. Two parameters z1, z2 define this subset (Fig. 5B), e.g. z1=118 and z2=124, that is extracted in step 104. All other pixels are discarded, thereby achieving a better performance of the computer unit 40. In this example, only (z2-zl)x320=6x320=1020 as compared to 240x320=76800 pixels have to be analyzed. The subset corresponds to a region of interest 44 that contains the touch surface 17 in a projection from a small angle of view. The discarded pixels correspond to an image of the face 32', the screens 34, 35 and/or parts of the environment. The touch surface 17 basically appears as a narrow strip 17' in the image 42 (see Fig. 5B). The z1-, z2-values can be determined during the installation of the system. In step 104, the image 42 usually taken in color is converted into gray scale (R+G+B/3) in order to enhance contrast, especially in twilight or at night.

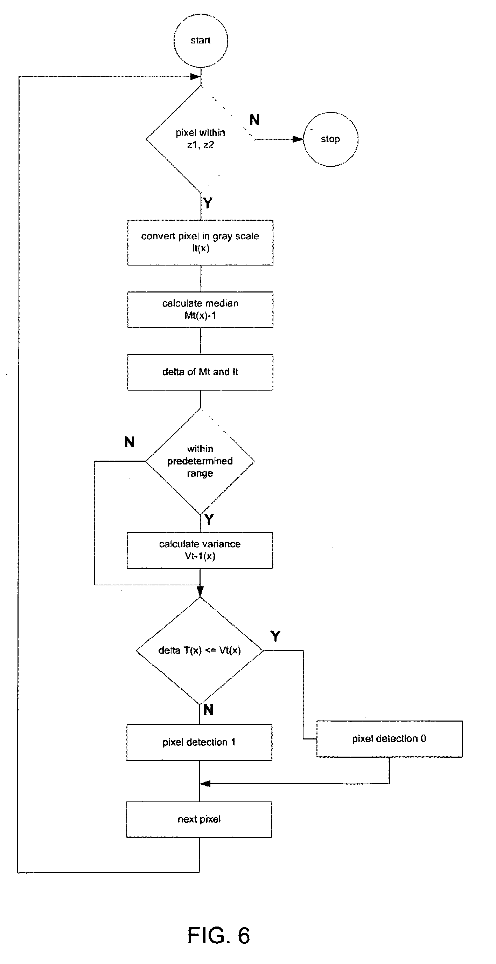

Step 106 comprises a realtime motion detection and is further illustrated in Fig. 6. A motion detection algorithm detects where motions are present and calculates their position x', y' with respect to the optical axes 25, 25'. From these world coordinates x', y' a transformation into screen coordinates x, y is made.

The software analyses 14 images per second, for example. An object is identified as pointer object 30 if the value of a pixel changes by a predetermined amount within a predetermined time interval. To avoid that a change in external lightning conditions falsifies this recognition, an average value for each pixel is determined, e.g. by taking the average of the past 10-20 images, and the difference with respect to this average is determined (step 108). This average background is constantly updated. Consequently, small but continuous changes in external lightning conditions enter into the average background and will not be recognized as pointer object. Furthermore, sudden but then constant alteration of the image acquired, e.g. by a chewing gum onto the touch surface, will only temporarily be identified as pointer object, but not affect the recognition of the true pointer object after a certain time.

As illustrated in Fig. 5C, step 106 comprises summing up the intensity differences to the average background for all pixels within the region of interest 44 having the same x'. The maximum of this curve Δ(x') yields the coordinate x'.

Step 110 comprises a transformation of the world coordinates x'/y' into screen coordinates x/y. The input parameters are x', y' (y' is derived in the same way as x') and several constant parameters gained during calibration of the system, like the position and orientation of the two cameras with respect to one another. Preferably, aberrations within the optical system are corrected by the computer unit within step 110.

In step 112, the screen coordinates x/y then enter into the control of the display, here by a mousepointer simulator. The mousepointer simulator calculates off-screen coordinates and causes a mouse event if the coordinates are within the touch surface or within the screen. Additionally, mouse-up, mouse-down and mouse-click events are simulated. Any standard software can be handled with the inventive system without needing to adapt it.

During installation of the system, the computer unit - a specific driver of the system - has to receive information on the size of the display and on the aperture of the cameras. In a calibration step, a set of spaced apart points appears on the display, e.g. in the right and left upper corner and in the middle of the lower part of the display. The user has to touch each of this points as visible on the touch surface in a predetermined order. From the world coordinates retrieved in this step and the known screen coordinates, the computer unit calculates and saves the position and the distance of the cameras. These parameters are used to convert all further pointer positions x'/y' into screen coordinates.

Fig. 6 shows the evaluation of the individual pixels of the images generated in further detail. First, it is checked whether a pixel lies within subset 44, i.e. has a z-coordinate between z1 and z2. If yes, the value of the pixel is converted in gray scale (It(x)). Then the median Mt(x)-1 for the pixel is calculated. This corresponds to the averaged value of the pixel in a predetermined number of past images, e.g. 14 images. The difference T(x) between the median and the actual value is evaluated. If it lies within a predetermined range (within the color scale), the variance is calculated. Otherwise, this step is skipped and the variance not updated. Then in a further step, the difference of T(x) to a predetermined threshold T (horizontal dashed line in Fig. 5C) is calculated. This difference is compared to the variance. This yields the information whether the pixel has been altered (1 if T(x)-T>variance) or not (0 if T(x)-T<=variance). Hereby, statistical variations in the measured pixel intensity are taken into account.

## Claims

1. A system for interacting with a display (16) through a display window (10), comprising:
- a recording unit (18) configured to be placed behind the display window (10) for recording a pointer object (30) in front of said display window (10);
- at least one deflection unit (28, 28') configured to direct a beam path from a space in front of the display window (10) to said recording unit (18);
- a computer unit (40) configured to be connected to said recording unit (18) for determining a position of the pointer object (30) with respect to the display window (10);
- shield means (32, 34, 34', 35, 35') by means of which beam paths that are not deflected by the deflection unit (28, 28') are suppressed.

2. The system according to claim 1, wherein the shield means (32, 34, 34', 35, 35') are configured such that beam paths corresponding to a direct incidence of light on the recording unit (18) and/or beam paths corresponding to light reflected at a surface of the display window (10) are suppressed.

3. The system according to claim 1 or 2, wherein the shield means (32, 34, 34', 35, 35') comprise at least one shading element (32) that is arranged at a distance from a front surface (12) of the display window (10) with a deflection surface (29) of the deflection means (28, 28') located between the front surface (12) and the shading element (32).

4. The system according to one of the preceding claims, wherein the display window (10) comprises at least two panes (10', 10") each having a front surface and a rear surface, and wherein the shield means (32, 34, 34', 35, 35') are configured such that beam paths corresponding to light reflected at at least one of said front surfaces or rear surfaces of the panes (10', 10") are suppressed.

5. The system according to one of the preceding claims, wherein the shield means (32, 34, 34', 35, 35') comprise at least one protective screen (34, 34', 35, 35') that is arranged at the front surface (12) and/or rear surface (14) of the display window (10).

6. The system according to claim 5, wherein the protective screen (34, 34', 35, 35') is generally planar and has an opening (36, 37) that is arranged in the vicinity of a deflection surface (29) of the deflection means (28, 28').

7. The system according to claim 5 or 6, wherein the protective screen (34, 34', 35, 35') comprises a foil having a reduced transparency as compared with the transparency of the display window (10).

8. The system according to one of the preceding claims, further comprising a display (16) arranged at or in the vicinity of a rear surface (14) of the display window (10), wherein the recording unit (18) preferably forms an integral part of the display (16).

9. The system according to claim 8, wherein the computer unit (40) interacts with the display (17) in such a way that a predetermined action is triggered based on a position and/or motion of the pointer object (30).

10. The system according to one of the preceding claims, wherein the recording unit (18) comprises at least one camera (20, 20') having an optical axis (25, 25') and a field of view (24, 24'), said field of view encompassing the display (16) as seen through the display window (10), wherein the optical axis (25, 25') is preferably arranged generally parallel to the surface (12, 14) of the display window (10).

11. The system according to claim 10, wherein the recording unit (18) comprises two cameras (20, 20'), said cameras (20, 20') each having an optical axis (25, 25') and a field of view (24, 24'), and wherein the fields of view (24, 24') overlap and the optical axes (25, 25') are oriented in different directions.

12. The system according to one of the preceding claims, wherein the computer unit (40) is configured to calculate a position and/or a movement of the pointer object (30) with respect to the display window (10) from at least one image recorded by the recording unit (18).

13. The system according one of the preceding claims, wherein the recording unit (18) is configured to detect light emitted by the display (17) and scattered by the pointer object (30).

14. The system according one of the preceding claims, wherein the computer unit (40) is configured to calculate an average image from a plurality of images recorded by the recording unit (18).

15. The system according to one of the preceding claims, wherein the computer unit (40) is configured to evaluate a predetermined subset of pixels (44), said pixels constituting an image (42) recorded by the recording unit, and said subset of pixels (44) corresponding to an image of the display (16) as seen through the display window (10).

16. Method for interacting with a display through a display window, comprising the following steps:
- recording a pointer object (30) in front of said display window (10) by means of a recording unit (18) placed behind the display window (10);
- directing a beam path from a space in front of the display window (10) to said recording unit (18) by means of at least one deflection unit (28, 28');
- determining a position of the pointer object (30) with respect to the display window (10) by means of a computer unit (40) connected to said recording unit (18);
- suppressing beam paths that are not deflected by the deflection unit (28, 28') by means of shield means (32, 34, 34', 35, 35').

17. Method according to claim 16, further comprising acquiring at least one image (42) encompassing the display (16) as seen through the display window (10) by means of the recording unit (18), preferably from at least two different perspectives.

18. Method according to claim 16 or 17, further comprising evaluating only a part of the image, said part corresponding to an image of the display as seen through the display window.

19. Method according to one of claims 16 to 18, further comprising calculating an average image from a plurality of images (42) recorded by the recording unit (18).

20. Method according to one of claims 16 to 19, further comprising illuminating the pointer object (30) with light emitted by the display (16).

21. Method according to one of claims 16 to 20, further comprising suppressing beam paths corresponding to a direct incidence of light on the recording unit (18) and/or to light reflected at a surface of the display window (10), in particular corresponding to light reflected at a surface of a double-glazed display window.
